# EUROPÄISCHE PATENTSCHRIFT

(11) **EP 2 941 358 B1**
(45) Veröffentlichungstag und Bekanntmachung des Hinweises auf die Patenterteilung: **27.02.2019**
(21) Anmeldenummer: 13811146.3
(22) Anmeldetag: 09.12.2013
(51) Int. Cl.: B60D 1/48, B60D 1/56

(54) **KRAFTFAHRZEUG**
MOTOR VEHICLE
VÉHICULE À MOTEUR

(30) Priorität: 07.01.2013 DE 102013200100
(43) Veröffentlichungstag der Anmeldung: 11.11.2015
(73) Patentinhaber: Bayerische Motoren Werke Aktiengesellschaft, 80809 München (DE)
(72) Erfinder: HÜBEL, Claus, 81827 München (DE)
(86) Internationale Anmeldenummer: PCT/EP2013/075940
(87) Internationale Veröffentlichungsnummer: WO 2014/106562

(56) Entgegenhaltungen:
- DE-A1- 10 059 497
- DE-A1- 10 107 965
- DE-A1- 10 107 966
- DE-T2- 60 214 652
- US-A1- 2009 108 566

## Beschreibung

Die Erfindung betrifft ein Kraftfahrzeug gemäß dem Oberbegriff des Anspruchs 1.

Aus der DE 41 04 671 A1 ist ein Kraftfahrzeug bekannt, bei dem eine Abschleppöse an einer unteren Tragstruktur (Vorderachsträger) befestigt ist und in waagrechter Richtung nach vorne in Richtung einer Stirnseite eines Vorderbaus des Kraftfahrzeuges zeigt.

Aus der US 2009/108566 A1 ist ein gattungsbildendes Kraftfahrzeug bekannt. Die bekannte Abschleppöse ist schwenkbar an einer unteren Tragstruktur angeordnet. Aufgabe der Erfindung ist es, ein Kraftfahrzeug mit einer Abschleppöse an einem vorderen Ende des Kraftfahrzeuges anzuordnen, die direkt zugänglich ist.

Diese Aufgabe wird durch die Merkmale des Anspruchs 1 gelöst.

Ein erfindungsgemäßes Kraftfahrzeug weist eine Karosserie mit einer Fahrgastzelle auf. Vor der Fahrgastzelle ist ein Vorderbau angeordnet. Der Vorderbau weist eine obere Tragstruktur und eine untere Tragstruktur auf. Die beiden Tragstrukturen sind miteinander verbunden. Die obere Tragstruktur weist zwei in Fahrzeugquerrichtung voneinander beabstandete Längsträger auf. Unterhalb der beiden Längsträger ist die untere Tragstruktur über mindestens einer Befestigungsstelle mit der oberen Tragstruktur verbunden. An der unteren Tragstruktur ist eine Abschleppöse angeordnet.

Eine Längsachse der Abschleppöse ist im Wesentlichen senkrecht oder unter einem Winkel schräg nach unten angeordnet, so dass ein freies Ende der Abschleppöse, an dem ein Ösenabschnitt der Abschleppöse ausgebildet ist, nach unten in Richtung einer Fahrbahn zeigt.

In einer vorteilhaften Ausführungsform ist die Abschleppöse unter einem Winkel α zu einer senkrechten Achse in Fahrzeuglängsrichtung nach vorne geneigt.

Der Winkel α liegt vorteilhafterweise in einem Größenbereich von 0° ≤ α ≤ 10°.

Die Abschleppöse weist einen Gewindeschaft auf, wobei der Gewindeschaft der Abschleppöse in einer in der unteren Tragstruktur ausgebildeten Abschleppösen-Aufnahme mit einem Innengewinde verschraubt ist.

Vorteilhafterweise ist in der unteren Tragstruktur jeweils ein Knoten ausgebildet. Der jeweilige Knoten verbindet einen Längsabschnitt und einen Querabschnitt der unteren Tragstruktur miteinander, wobei an mindestens einem der beiden Knoten eine Abschleppöse befestigt ist.

In einer vorteilhaften Ausführungsform steht der Ösenabschnitt der Abschleppöse in senkrechter Richtung in Richtung einer Fahrbahn über einen unteren Rand einer Frontverkleidung des Vorderbaus so weit über, dass bei einem Abschleppvorgang verwendete Abschleppmittel die untere Außenfläche der Frontverkleidung nicht berühren.

Die Längsachse der Abschleppöse steht vorteilhafterweise senkrecht zur Fahrzeugquerrichtung.

Die Abschleppöse weist in einer vorteilhaften Ausführungsform einen ausreichenden Abstand zu einer Innenwand eines benachbarten Rades auch bei einem maximalen Lenkeinschlag des Rades zu einer Fahrzeugmitte hin auf.

Bei der erfindungsgemäßen Anordnung einer Abschleppöse an einem Kraftfahrzeug an einer unteren Tragstruktur ist die Abschleppöse direkt zugänglich, ohne dass ein Deckel in einer Verkleidung entfernt werden muss. Durch die Verschraubbarkeit der Abschleppöse in der Abschleppösen-Aufnahme mit dem Innengewinde ergibt sich eine einfache Handhabung der Abschleppöse bei der Montage und der Demontage.

Eine Ausführungsform der Erfinder wird nachstehend anhand der Zeichnungen beispielshalber beschrieben. Dabei zeigen:
- Fig. 1: eine Prinzipdarstellung einer Seitenansicht einer oberen Tragstruktur und einer unteren Tragstruktur an einem Vorderbau eines Kraftfahrzeuges und
- Fig. 2: eine Ansicht von vorne auf ein teilweise geschnittenes vorderes Ende des Vorderbaus.

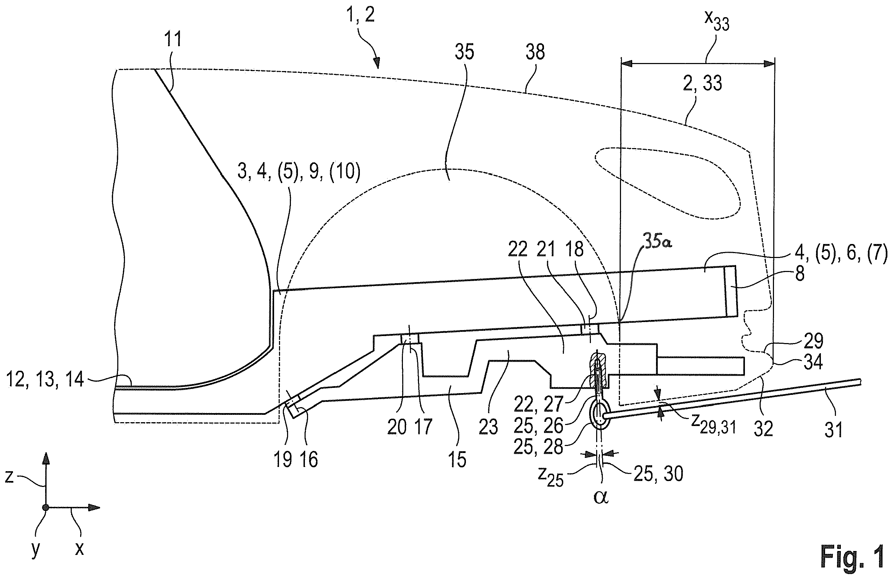

Die Fig. 1 zeigt einen Vorderbau 2 eines Kraftfahrzeuges 1. In dem Vorderbau 2 ist eine obere Tragstruktur 3 ausgebildet, die zwei, in Fahrzeugquerrichtung y zueinander beabstandete Längsträgers 4, 5 aufweist. In der gezeigten Ausführungsform dient die obere Tragstruktur 3 als Motorträger.

Die Längsträger 4, 5 sind in der gezeigten Ausführungsform an ihrem jeweiligen vorderen Ende 6, 7 über einen Querträger 8 miteinander verbunden. Ein jeweiliges hinteres Ende 9, 10 des jeweiligen Längsträgers 4, 5 ist an einer Stirnwand 11 angeordnet und verläuft dann zu einem Boden 12 einer Karosserie 13. Die Karosserie 13 weist eine Fahrgastzelle 14 auf.

Unterhalb der oberen Tragstruktur 3 ist eine untere Tragstruktur 15 ausgebildet. Die untere Tragstruktur 15 ist als ein Vorderachsträger ausgebildet. In der gezeigten Ausführungsform ist die untere Tragstruktur 15 an jeweils drei Befestigungsstellen 16, 17, 18 mit dem jeweiligen Längsträger 4, 5 über Befestigungselemente 19, 20, 21 verbunden.

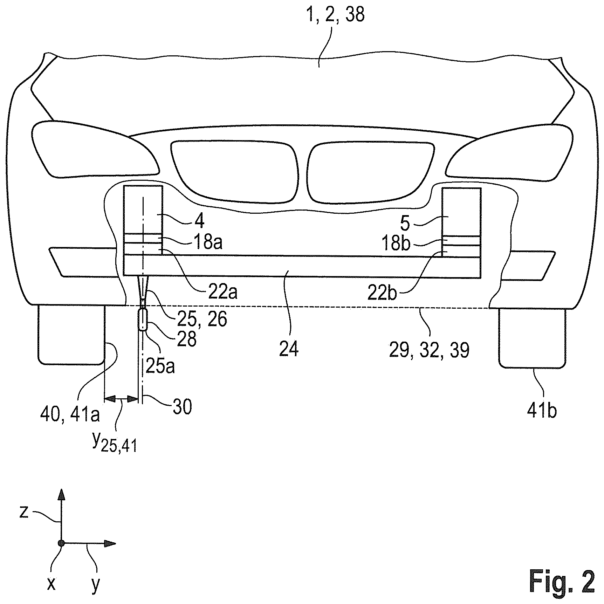

Ein vorderer Knoten 22 der unteren Tragstruktur 15 verbindet einen Längsabschnitt 23 der unteren Tragstruktur 15 mit einem in der Fig. 2 gezeigten Querabschnitt 24 der unteren Tragstruktur 15 miteinander. In dem vorderen Knoten 22 ist eine Abschleppösen-Aufnahme vorgesehen, die eine mit einem (Innen-) Gewinde versehene Bohrung 27 aufweist. In der Bohrung 27 der Abschleppösen-Aufnahme ist ein mit einem (Außen-) Gewinde versehener Schaft 26 einer Abschleppöse 25 verschraubt.

Ein Ösenabschnitt 28 der Abschleppöse 25 ist unterhalb einer Frontverkleidung 29, in Richtung einer nicht dargestellten Fahrbahn, angeordnet. Die Frontverkleidung 29 ist in strichlierten Linien in der Fig. 1 dargestellt.

Die Abschleppöse 25 ist in der gezeigten Ausführungsform mit ihrer Längsachse 30 unter einem Winkel α zu einer senkrechten Linie z₂₅ geneigt. In der dargestellten Ausführungsform verläuft die Längsachse 30 schräg geneigt nach vorne in Richtung der Fahrzeuglängsrichtung x.

Der Ösenabschnitt 28 ragt über die benachbarte Frontverkleidung 29 so weit über, dass ein Abschleppmittel 31, wie ein Seil oder eine Abschleppstange, an der zur Fahrbahn hin zeigenden, unteren Außenfläche 32 der Frontverkleidung 29 einen ausreichenden Abstand z_{29,31} aufweist.

In der Fig. 1 ist ferner ein Überhang 33 eines vorderen Endes 34 des Vorderbaus 2 erkennbar. Der Überhang 33 erstreckt sich zwischen einem vorderen Ende 35a eines Radhauses 35 und dem vorderen Ende 34 des Vorderbaus 2 über eine Länge x₃₃. An das obere, vordere Ende 34 des Vorderbaus 2 schließt sich an der Oberseite des Vorderbaus 2 eine Motorhaube 38 an. In der gezeigten Ausführungsform befindet sich die jeweilige Lage der Knoten 22a und 22b und damit die Lage der Abschleppöse 25 in Höhe des vorderen Endes 35a des jeweiligen Radhauses 35

Aus der Darstellung der Fig. 2 geht hervor, dass die Abschleppöse 25 über einen unteren Rand 39 der Frontverkleidung 29 übersteht. Ferner ist aus der Fig. 2 ersichtlich, dass die Abschleppöse 25 in Bezug auf die Fahrzeugquerrichtung y senkrecht ausgerichtet ist, d.h. keinen Neigungswinkel aufweist.

Ferner ist aus der Fig. 2 die Lage des jeweiligen Längsträgers 4 und 5, die Lage der jeweiligen Befestigungsstelle 18a, 18b sowie die jeweilige Lage der Knoten 22a und 22b und der Querabschnitt 24 der unteren Tragstruktur 15 erkennbar.

Aus der Fig. 2 ist ersichtlich, dass zwischen einer Innenwand 40 eines Rades 41a ein ausreichender Abstand y_{25,41(a)} auch bei einem maximalen Lenkeinschlag des Rades 41a zu einer Fahrzeugmitte hin gegeben ist.

Die durch die beiden voneinander beabstandeten Längsträger 4, 5 gebildete obere Tragstruktur 3 ist ein erster, oberer Belastungspfad. Die durch den Hilfsrahmen gebildete untere Tragstruktur 15 ist ein zweiter, unterer Belastungspfad. Die von der Abschleppöse 25 bei einem Abschleppvorgang wirkende Kraft wird somit in die untere Tragstruktur 15 und damit in den zweiten, unteren Belastungspfad eingeleitet.

## Patentansprüche

1. Kraftfahrzeug (1) mit einer Karosserie (13), die eine Fahrgastzelle (14) bildet, wobei vor der Fahrgastzelle (14) ein Vorderbau (2) angeordnet ist, wobei der Vorderbau (2) eine obere Tragstruktur (3) und eine untere Tragstruktur (15) aufweist, wobei die beiden Tragstrukturen (3, 15) miteinander verbunden sind, wobei die obere Tragstruktur (3) zwei in Fahrzeugquerrichtung voneinander beabstandete Längsträger (4, 5) aufweist, wobei unterhalb der beiden Längsträger (4, 5) die untere Tragstruktur (15) über mindestens eine Befestigungsstelle (16, 17, 18) mit der oberen Tragstruktur (3) verbunden ist, wobei an der unteren Tragstruktur (15) eine Abschleppöse (25) angeordnet ist,
wobei eine Längsachse (30) der Abschleppöse (25) im Wesentlichen senkrecht oder unter einem Winkel schräg nach unten angeordnet ist, so dass ein freies Ende (25a) der Abschleppöse (25), an dem ein Ösenabschnitt (28) der Abschleppöse (25) ausgebildet ist, nach unten in Richtung einer Fahrbahn zeigt,
**dadurch gekennzeichnet, dass** die Abschleppöse (25) einen Gewindeschaft (26) aufweist, dass der Gewindeschaft (26) der Abschleppöse (25) in einer in der unteren Tragstruktur (15, 22) ausgebildeten Abschleppösen-Aufnahme (27) verschraubbar ist, und
dass die Abschleppösen-Aufnahme (27) eine mit einem Gewinde versehene Bohrung (27) aufweist.

2. Kraftfahrzeug nach den Anspruch 1,
**dadurch gekennzeichnet, dass** die Abschleppöse (25) unter einem Winkel α zu einer senkrechten Achse z in Fahrzeuglängsrichtung x nach vorne geneigt ist.

3. Kraftfahrzeug nach den Ansprüchen 1 oder 2,
**dadurch gekennzeichnet, dass** der Winkel α in einem Größenbereich von 0° ≤ a ≤ 10° liegt.

4. Kraftfahrzeug nach einem der vorhergehenden Ansprüche,
**dadurch gekennzeichnet, dass** in der unteren Tragstruktur (15) jeweils ein Knoten (22a, 22b) ausgebildet ist, dass der jeweilige Knoten (22a, 22b) einen Längsabschnitt (23) und einen Querabschnitt (24) der unteren Tragstruktur (15) miteinander verbindet und dass an mindestens einem der beiden Knoten (22a, 22b) eine Abschleppöse (25) befestigt ist.

5. Kraftfahrzeug nach einem der vorhergehenden Ansprüche,
**dadurch gekennzeichnet, dass** der Ösenabschnitt (28) der Abschleppöse (25) in senkrechter Richtung z in Richtung einer Fahrbahn über einen unteren Rand (39) einer Frontverkleidung (29) des Vorderbaus (2) so weit übersteht, dass Abschleppmittel (31), die bei einem Abschleppvorgang verwendet werden, die untere Außenfläche (32) der Frontverkleidung (29) nicht berühren.

6. Kraftfahrzeug nach einem der vorhergehenden Ansprüche,
**dadurch gekennzeichnet, dass** die Längsachse (30) der Abschleppöse (25) zur Fahrzeugquerrichtung y senkrecht steht.

7. Kraftfahrzeug nach einem der vorhergehenden Ansprüche,
**dadurch gekennzeichnet, dass** die Abschleppöse (25) einen ausreichenden Abstand y_{25,41} zu einer Innenwand (40) eines benachbarten Rades (41) auch bei einem maximalen Lenkeinschlag des Rades (41) zu einer Fahrzeugmitte hin aufweist.

## Claims

1. A motor vehicle (1) with a vehicle body (13) which forms a passenger compartment (14), wherein a front end (2) is arranged in front of the passenger compartment (14), wherein the front end (2) has an upper supporting structure (3) and a lower supporting structure (15), wherein the two supporting structures (3, 15) are connected together, wherein the upper supporting structure (3) has two side members (4, 5) spaced apart from each other in the transverse direction of the vehicle, wherein beneath the two side members (4, 5) the lower supporting structure (15) is connected to the upper supporting structure (3) by means of at least one fastening point (16, 17, 18), wherein a towing lug (25) is arranged on the lower supporting structure (15),
wherein a longitudinal axis (30) of the towing lug (25) is arranged substantially vertically or at an angle obliquely downwards, so that a free end (25a) of the towing lug (25), on which a lug portion (28) of the towing lug (25) is formed, points downwards in the direction of a roadway,
**characterised in that** the towing lug (25) has a threaded shank (26), **in that** the threaded shank (26) of the towing lug (25) can be screwed into a towing-lug receptacle (27) formed in the lower supporting structure (15, 22), and
**in that** the towing-lug receptacle (27) has a bore (27) provided with a thread.

2. A motor vehicle according to Claim 1,
**characterised in that** the towing lug (25) is inclined forwards at an angle α to a vertical axis z in the longitudinal direction x of the vehicle.

3. A motor vehicle according to Claims 1 or 2,
**characterised in that** the angle α lies in a size range of 0° ≤ α ≤ 10°.

4. A motor vehicle according to one of the preceding claims,
**characterised in that** in each case a node (22a, 22b) is formed in the lower supporting structure (15), **in that** the respective node (22a, 22b) connects together a longitudinal portion (23) and a transverse portion (24) of the lower supporting structure (15), and **in that** a towing lug (25) is fastened to at least one of the two nodes (22a, 22b).

5. A motor vehicle according to one of the preceding claims,
**characterised in that** the lug portion (28) of the towing lug (25) in the vertical direction z projects so far in the direction of a roadway across a lower edge (39) of a front trim (29) of the front end (2) that towing means (31) which are used in a towing operation do not contact the lower outer face (32) of the front trim (29).

6. A motor vehicle according to one of the preceding claims,
**characterised in that** the longitudinal axis (30) of the towing lug (25) is perpendicular to the transverse direction y of the vehicle.

7. A motor vehicle according to one of the preceding claims,
**characterised in that** the towing lug (25) is at a sufficient distance y_{25,41} from an inner wall (40) of an adjacent wheel (41) even at a maximum steering angle of the wheel (41) towards a centre of the vehicle.

## Revendications

1. Véhicule comprenant une carrosserie (1) qui forme un habitacle (13), dans lequel, à l'avant de l'habitacle (14), est monté un ensemble avant (2) comportant une structure portante supérieure (3) et une structure portante inférieure (15), les deux structures portantes (3, 15) étant liées entre elles, la structure portante supérieure (3) comportant deux longerons (4, 5) situés à distance l'un de l'autre dans la direction transversale du véhicule, la structure portante inférieure (15) étant reliée à la structure portante supérieure (3) au dessous des deux longerons (4, 5) par l'intermédiaire d'au moins un élément de fixation (16, 17, 18), un anneau de remorquage (25) étant monté sur la structure portante inférieure (15), l'axe longitudinal (30) de l'anneau de remorquage (25) étant monté essentiellement verticalement ou angulairement obliquement vers le bas de sorte que l'extrémité libre (25a) de l'anneau de remorquage (25) sur laquelle est formé un segment d'anneau (28) de l'anneau α de remorquage (25) soit orientée vers le bas en direction de la chaussée,
**caractérisé en ce que**
l'anneau de remorquage (25) comporte un arbre fileté (26), l'arbre fileté (26) de l'anneau de remorquage (25) peut être vissé dans un logement de réception (27) de celui-ci formé dans la structure portante inférieure (15, 22),
le logement de réception (27) de l'anneau de remorquage comporte un perçage (27) équipé d'un filetage.

2. Véhicule conforme à la revendication 1,
**caractérisé en ce que**
l'anneau de remorquage (25) est incliné vers l'avant sous un angle α par rapport à un axe vertical z dans la direction longitudinale x du véhicule.

3. Véhicule conforme à l'une des revendications 1 et 2,
**caractérisé en ce que**
l'angle α est situé dans la plage de 0°≤ α ≤ 10°.

4. Véhicule conforme à l'une des revendications précédentes,
**caractérisé en ce que**
dans la structure portante inférieure (15) est respectivement formé un nodule (22a, 22b), chaque nodule (22a, 22b) relie entre eux un segment longitudinal (23) et un segment transversal (24) de la structure portante inférieure (15), et sur au moins l'un des deux nodules (22a, 22b) est fixé un anneau de remorquage (25).

5. Véhicule conforme à l'une des revendications précédentes,
**caractérisé en ce que**
le segment d'anneau (28) de l'anneau de remorquage (25) dépasse suffisamment du bord inférieur (39) de l'habillage frontal (29) de l'ensemble avant (2) dans la direction verticale z, vers la chaussée, pour que des moyens de remorquage (31) utilisés lors d'un procédé de remorquage ne viennent pas en contact avec la surface externe inférieure (32) de l'habillage frontal (29).

6. Véhicule conforme à l'une des revendications précédentes,
**caractérisé en ce que**
l'axe longitudinal (30) de l'anneau de remorquage (25) est perpendiculaire à la direction transversale y du véhicule.

7. Véhicule conforme à l'une des revendications précédentes,
**caractérisé en ce que**
l'anneau de remorquage (25) est à une distance y_{25,41} suffisante de la paroi interne (40) d'une roue (41) voisine également lors d'un braquage maximum de la roue (41) vers le milieu du véhicule.
